# EUROPÄISCHE PATENTSCHRIFT

(11) **EP 2 553 691 B1**
(45) Veröffentlichungstag und Bekanntmachung des Hinweises auf die Patenterteilung: **14.05.2014**
(21) Anmeldenummer: 11791580.1
(22) Anmeldetag: 07.12.2011
(51) Int. Cl.: H01H 1/14, H01T 1/14, H01C 7/12, H01H 37/00, H01H 83/10

(54) **ÜBERSPANNUNGSSCHUTZEINRICHTUNG, UMFASSEND MINDESTENS EINEN ÜBERSPANNUNGSABLEITER**
OVERVOLTAGE PROTECTION DEVICE HAVING AT LEAST ONE SURGE ARRESTER
DISPOSITIF DE PROTECTION CONTRE LES SURTENSIONS COMPRENANT AU MOINS UN PARAFOUDRE

(30) Priorität: 18.02.2011 DE 102011011717; 26.04.2011 DE 102011018556
(43) Veröffentlichungstag der Anmeldung: 06.02.2013
(73) Patentinhaber: Dehn + Söhne GmbH + Co. KG, 92318 Neumarkt/Opf. (DE)
(72) Erfinder: HIRSCHMANN, Helmut, 92348 Berg (DE); WITTMANN, Georg, 92283 Lauterhofen (DE); ZÄUNER, Edmund, 92334 Berching/Pollanten (DE)
(74) Vertreter: Kruspig, Volkmar
(86) Internationale Anmeldenummer: PCT/EP2011/072131
(87) Internationale Veröffentlichungsnummer: WO 2012/110135

(56) Entgegenhaltungen:
- EP-A1- 0 905 839
- EP-A1- 1 774 630

## Beschreibung

Die Erfindung betrifft eine Überspannungsschutzeinrichtung, umfassend mindestens einen Überspannungsableiter und eine, mit dem Überspannungsableiter in Reihe geschaltete, thermisch auslösbare Schalteinrichtung, wobei vorgenannte Mittel eine Baueinheit bilden und das thermische Auslösemittel im Bereich der zu erwartenden Erwärmung des Überspannungsableiters bei dessen Überlastung angeordnet ist, gemäß Oberbegriff des Patentanspruchs 1.

Aus der DE 295 19 313 U1 ist ein Überspannungsableiter auf Varistorbasis vorbekannt, wobei für eine direkte Übertragung der am Varistor im Schadensfall entstandenen unzulässigen Wärme auf eine thermische Auslöseeinrichtung gesorgt ist. Hierfür ist im Steckteil eine Tragwand vorhanden, wobei der Varistor an einer Seitenfläche der Tragwand und die thermische Auslösung sowie das dazu gehörige Schaltmittel an der anderen Seitenfläche der Tragwand angebracht sind. Hierdurch liegt die thermische Auslösung dem Varistor gegenüber. In einer Ausgestaltung sind eine oder mehrere Anschlussfahnen des Varistors durch die Trennwand hindurch in den Bereich geführt, in dem sich die thermische Auslösung und das entsprechende Schaltmittel befindet.

Die Führung des Betriebsstroms bzw. der auftretenden Überlastströme erfolgt über Kontaktmittel eines Steckteils, welches wiederum in ein Basisteil einbringbar ist. Der Strom gelangt über das Schaltmittel zum Varistor dergestalt, dass auch das eigentliche thermische Auslösemittel, insbesondere ein Lot, stromdurchflossen ist.

Die gesamte Ausführung und Konstruktion der Lehre nach DE 295 19 313 U1 kann nur sehr kleine Ströme schalten. Im Falle des Auftretens von Kurzschlussströmen oder aber bei Gleichspannungsanwendungen ist ein zusätzliches externes Schaltorgan, z.B. in Form eines separaten Schaltmittels oder einer Sicherung erforderlich.

Aus der EP 1 447 831 B1 oder der EP 2 065 914 A1 sind bauliche Kombinationen von Überspannungssteckteilen mit zusätzlichen Schalteinrichtungen bekannt, die entweder in ein gemeinsames Grundgehäuse eingebracht oder von einem solchen Grundgehäuse umgeben sind. Die im oben genannten Stand der Technik geschilderten Lösungen weisen ein Auslöse- bzw. Ausschaltverhalten auf, das nicht an die besonderen Eigenschaften der jeweils eingesetzten Überspannungsableiter, z.B. Varistoren, angepasst ist.

Bei der Überspannungsschutzeinrichtung gemäß EP 2 096 657 A1 ist zunächst eine thermische Abtrennvorrichtung mit lichtbogenlöschenden Eigenschaften vorhanden. Darüber hinaus ist eine zweite Schalteinrichtung mit Löschblechen gebildet. Dieser Stand der Technik entspricht einem Schaltgerät, das mit einer Überspannungsschutzfunktion erweitert wurde und welches nur eingeschränkte Leistungsdaten besitzt sowie lediglich für Spezialanwendungen geeignet ist.

Fasst man den Stand der Technik zusammen, dann sind thermische Abtrennvorrichtungen üblicherweise so ausgelegt, dass sie das Alterungsverhalten spannungsbegrenzender Bauteile, wie z.B. Varistoren, überwachen und bei Erwärmung über einer kritischen Temperatur ansprechen. Im Abtrennvorgang fließen im Regelfall nur sehr geringe Ströme im Milliamperebis zum maximal einstelligen Amperebereich. Insofern liegt das Schaltvermögen klassischer thermischer Antrennvorrichtungen auch nur in diesem geringen Strombereich.

Überlast- und/oder Fehlerfälle von Überspannungsableitern können im Ergebnis praktischer Erfahrungen auch zu einem Totalausfall bzw. zu einem Durchlegieren der überspannungsbegrenzenden Bauteile führen. Der dann auftretende Kurzschlussstrom der angeschlossenen Versorgungsquelle muss von vorgeordneten Schutzeinrichtungen, z.B. einer Sicherung oder einem mechanischen Schaltgerät unterbrochen bzw. abgeschaltet werden, um eine Back-Up-Schutzfunktion zu erhalten.

Gemäß der EP 1 447 831 B1 wird der fließende Kurzschlussstrom von einer entsprechenden speziellen Schalteinrichtung unterbrochen.

Nachteilig bei der Kombination von Überspannungsschutzgeräten mit Sicherung bzw. mechanischem Schaltgerät ist es, dass zum Ansprechen bzw. Auslösen dieser Elemente immer ein Kurzschlussstrom im Sinne eines mehrfachen Nennstroms der Schalteinrichtung bzw. Sicherung fließen muss.

Dieser Strom, der in der Regel mehrere hundert Ampere aufweist oder in den Kiloamperebereich hineinreicht, kann zur Zerstörung oder Explosion der überspannungsbegrenzenden Bauteile führen und eine Brandgefahr für das Gerät selbst oder für benachbarte Einrichtungen darstellen.

Ist also der auftretende Fehlerstrom in einer Überspannungsschutzeinrichtung größer als derjenige, der von der thermischen Abtrennvorrichtung selbst gelöscht werden kann, jedoch kleiner als der Auslösestrom von Back-Up-Schutzeinrichtungen, wie z.B. einer Sicherung, dann kann der Ableiter mit den oben erwähnten Folgen zerstört werden.

Aus dem Vorgenannten ist es daher Aufgabe der Erfindung, eine weiterentwickelte Überspannungsschutzeinrichtung, umfassend mindestens einen Überspannungsableiter und eine, mit dem Überspannungsableiter in Reihe geschaltete, thermisch auslösbare Schalteinrichtung anzugeben, wobei der Zustand des eingesetzten Überspannungsableiters, z.B. eines Varistors, entsprechend seinem Betriebs- und Überlastverhalten erfasst und das überspannungsbegrenzende Bauteil abgeschaltet wird, bevor ein Totalausfall oder eine Zerstörung auftritt.

Dabei sollen erfindungsgemäß auftretende netzbedingte Fehler- oder Kurzschlussströme, die noch nicht zum Auslösen externer Sicherungen führen, von der integrierten Schalteinrichtung selbsttätig abgeschaltet werden, so dass sich ein erweiterter, lückenloser Eigenschutzbereich ergibt.

Die Lösung der Aufgabe der Erfindung erfolgt durch eine Überspannungsschutzeinrichtung gemäß der Merkmalskombination nach Patentanspruch 1, wobei die Unteransprüche mindestens zweckmäßige Ausgestaltungen und Weiterbildungen darstellen.

Es wird demnach von einer Überspannungsschutzeinrichtung, umfassend mindestens einen Überspannungsableiter und eine, mit dem Überspannungsableiter in Reihe geschaltete, thermisch auslösbare Schalteinrichtung ausgegangen, wobei vorgenannte Mittel eine Baueinheit bilden und das thermische Auslösemittel im Bereich der zu erwartenden Erwärmung des Überspannungsableiters bei dessen Überlast angeordnet ist.

Erfindungsgemäß ist im Unterschied zum bekannten Stand der Technik das thermische Auslösemittel als nicht vom Betriebs- oder Stoßstrom durchflossenes Anschlagteil ausgebildet, welches bei thermischer Überlast eine Entriegelung der Schalteinrichtung freigibt, wobei diese im Vergleich zum Bekannten über ein erhöhtes Eigenlöschvermögen verfügt.

Das vorerwähnte Anschlagteil ist thermisch und mechanisch mit dem Überspannungsableiter gekoppelt und blockiert den Bewegungsweg eines Entriegelungsschiebers.

Die Schalteinrichtung weist zwei gegenüberliegende, ineinandergreifende Kontaktstücke auf, wobei mindestens eines der Kontaktstücke beweglich ausgeführt ist und in Öffnungsrichtung der Schalteinrichtung unter Federvorspannung steht. Der Schließzustand der Schalteinrichtung ist durch die Entriegelung gesichert und kann durch das thermische Auslösemittel zur Öffnung der Schalteinrichtung freigegeben werden. Bei einer Ausführungsvariante sind die Kontaktstücke bolzenartige Elemente aus einem leitfähigen, bevorzugt metallischen Material.

Erfindungsgemäß dringt im Öffnungsfall der Schalteinrichtung, d.h. im Fall der sich relativ voneinander weg bewegenden Kontaktstücke in den sich ergebenden Abstandsraum ein Trennelement ein. Dieses Trennelement kann aus einem isolierenden, löschgasabgebenden Material, z.B. POM, bestehen.

Das isolierende Trennelement steht ebenfalls unter Federvorspannung, um im Öffnungsfall schnell und geric-htet in den Abstandsraum einzudringen. Dabei kann das zum Abstandsraum gerichtete Ende des Trennelements als Trennkeil oder als mit einer Fase versehener Abschnitt ausgebildet werden.

Mindestens Abschnitte der Kontaktstücke sind innerhalb eines eine Lichtbogenkammer bildenden Formkörpers befindlich, wobei der Formkörper einen Ansatz aufweist, welcher in einem Winkel orientiert ist, der von der Bewegungsrichtung des beweglichen Kontaktstücks abweicht. Hier kann es sich um eine 90°-Orientierung handeln. Zur Aufnahme der Kontaktstücke weist der Formkörper Aufnahmeräume auf.

Ebenfalls besitzt der Ansatz einen Hohlraum zur Aufnahme des Trennelements und der die Vorspannkraft erzeugenden Federeinrichtung.

Die zueinander weisenden Flächen der Kontaktstücke der Schalteinrichtung können eine Kontur besitzen, um die Stromübergangsfläche zu vergrößern und den Übergangswiderstand zu verringern.

Dabei können bei einer Ausgestaltung die Flächen als ineinandergreifender Konus und Gegenkonus ausgebildet werden.

Der Entriegelungsschieber, welcher bevorzugt aus einem Kunststoffmaterial besteht bzw. als Kunststoff-Spritzteil gefertigt ist, liegt einerseits am Anschlagteil an und fixiert andererseits die Schalteinrichtung, d.h. das bewegliche, federvorgespannte Kontaktstück.

Der Entriegelungsschieber besitzt darüber hinaus einen nasenartigen Abschnitt, welcher das federvorgespannte Kontaktstück der Schalteinrichtung sichert.

Im Bereich des federvorgespannten Kontaktstücks, welches vom nasenartigen Abschnitt des Entriegelungsschiebers gesichert wird, ist ein flexibles elektrisches Verbindungsmittel befestigt, was dann zu einem Anschluss am Überspannungsableiter führt.

Der Formkörper, der Hohlraum und das Trennelement sind bevorzugt so ausgebildet, dass insbesondere bei geöffneter Schalteinrichtung eine gasdichte Abschottung realisiert wird, so dass sich ein quasi gekapselter Lichtbogenbrennraum bzw. eine diesbezügliche Lichtbogenlöschkammer ergibt.

Der Bewegungsvorgang des beweglichen Kontaktstücks kann durch die Druckwirkung des sich ausbildenden Lichtbogens unterstützt werden.

Die Erfindung soll nachstehend anhand eines Ausführungsbeispiels sowie unter Zuhilfenahme von Figuren näher erläutert werden.

### Hierbei zeigen:

- Fig. 1a: ein Prinzipschaltbild der erfindungsgemäßen Lösung, wobei ein Überwachungskreis Ü und der Betriebs- oder Stoßstromkreis S funktional getrennt sind;
- Fig. 1b: eine pespektivische Darstellung einer Überspannungsschutzeinrichtung gemäß der Erfindung, ausgebildet als Steckteil zur Aufnahme in ein (nicht gezeigtes) Basisteil, wobei innerhalb des Steckteils der Formkörper mit Schalteinrichtung sowie das thermische Auslösemittel befindlich sind;
- Fig. 2a: eine Prinzipdarstellung eines scheibenförmigen Überspannungsableiters, z.B. eines Varistors, mit rahmenartiger Metallfläche und einem thermischen Auslösemittel, z.B. in Form eines Isolierkörpers mit einseitiger leitfähiger Beschichtung;
- Fig. 2b: eine Darstellung ähnlich der jenigen nach Fig. 2a, jedoch ergänzt um die Schalteinrichtung nebst Entriegelungsschieber im geschlossenen Zustand;
- Fig. 2c: eine Darstellung ähnlich derjenigen nach Fig. 2b, jedoch im Zustand der thermisch ausgelösten, geöffneten Schalteinrichtung;
- Fig. 3a: eine teilweggebrochene Detaildarstellung des Formkörpers zur Aufnahme der Schalteinrichtung mit Trennelement im geschlossenen Zustand der Schalteinrichtung;
- Fig. 3b: eine Darstellung ähnlich derjenigen nach Fig. 3a, jedoch im Zustand der geöffneten Schalteinrichtung und dem im Abstandsraum eingefahrenen Trennelement;
- Fig. 4a: eine Darstellung ähnlich derjenigen nach Fig. 2b, jedoch mit weiterer Ausgestaltung der Schalteinrichtung als Entriegelungsschieber ausgebildet im geschlossenen Zustand;
- Fig. 4b: eine Darstellung ähnlich derjenigen nach Fig. 4a, jedoch mit dem Entriegelungsschieber mit geöffneten Zustand;
- Fig. 5a: eine Detaildarstellung des Entriegelungsschiebers wie in den Fig. 4a und 4b gezeigt, und zwar teilweggebrochen, um die sich im geschlossenen Zustand befindliche Schalteinrichtung zu verdeutlichen, und
- Fig. 5b: eine Darstellung ähnlich derjenigen nach Fig. 5a mit geöffnetem Entriegelungsschieber und dem Kontaktelement, welches in eine Durchgangsöffnung des Schiebers integriert ist.

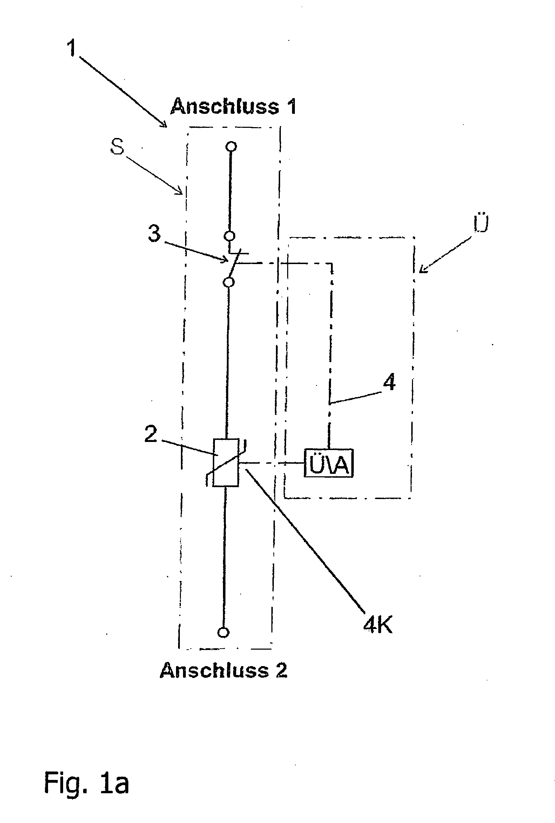

Die Darstellung des Prinzipschaltbilds nach Fig. 1a geht von einem Überspannungsschutzmittel 1 aus, bei welchem der Betriebs-Stoßstrompfad S und der Überwachungspfad Ü funktional getrennt sind. Die integrierte Schalteinrichtung 3 weist ein erweitertes Eigenschalt- und Eigenlöschvermögen auf, wobei mit dem Bezugszeichen 2 der Überspannungsableiter, z.B. ausgebildet als Varistor, gekennzeichnet ist. Mit dem Bezugszeichen 4 ist in Fig. 1a die Entriegelung der Schalteinrichtung 3 symbolisiert und mit 4K das thermische Koppelelement als thermisches Auslösemittel bezeichnet.

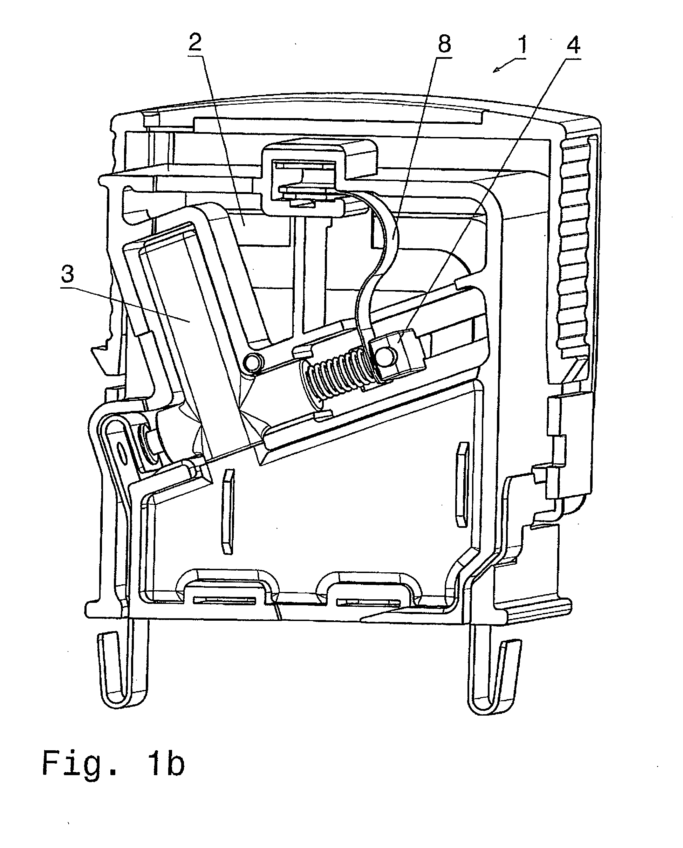

Das erfindungsgemäß realisierte Steckteil umfasst die Überspannungsschutzeinrichtung 1 mit dem Überspannungsableiter 2, den Entriegelungsschieber 4 und den Formkörper 3, welcher die Schalteinrichtung aufnimmt. Darüber hinaus sind an der Unterseite des Steckteils Steckkontakte zur Betriebsstromzuführung vorhanden. Bezugszeichen 8 nach Fig. 1b kennzeichnet einen beweglichen Leiterabschnitt, um den Stromkreis vom Steckkontakt im Bild links über die Schalteinrichtung zum Varistor und von diesem zum Steckkontakt im Bild rechts zu schließen.

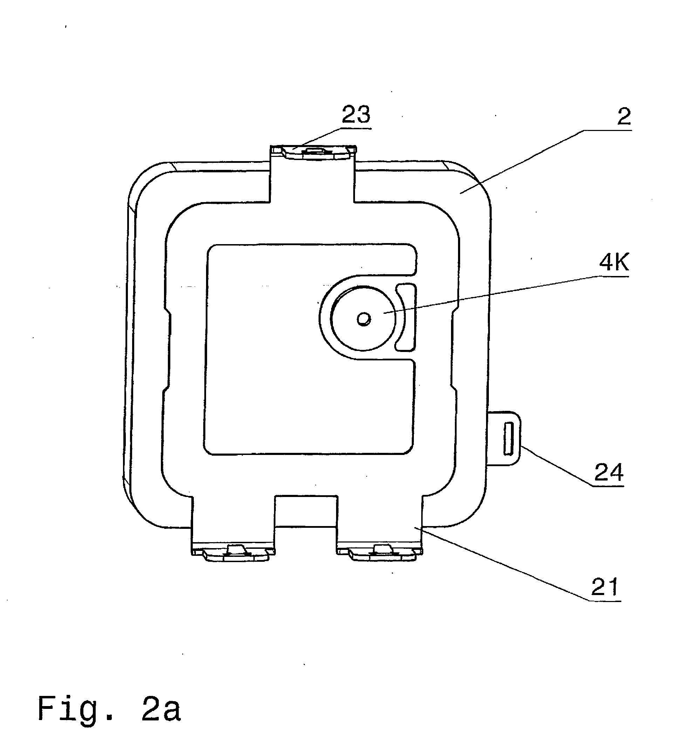

Die Fig. 2a zeigt den scheibenförmigen Varistor 2 mit einer aufgebrachten metallischen Leitfläche 21, die sich in einen Bereich erwarteter starker Erwärmung des Varistors 2 erstreckt, wobei in diesem Bereich das thermische Auslösemittel 4K aufgebracht ist.

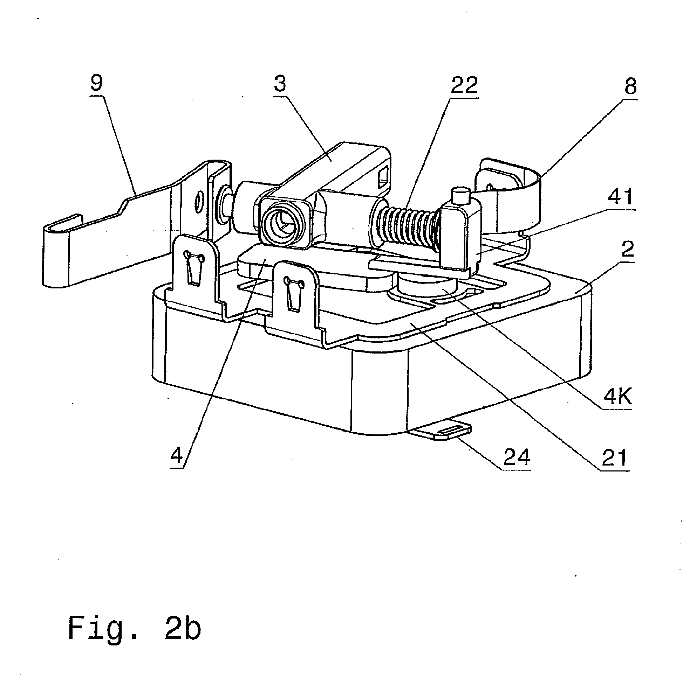

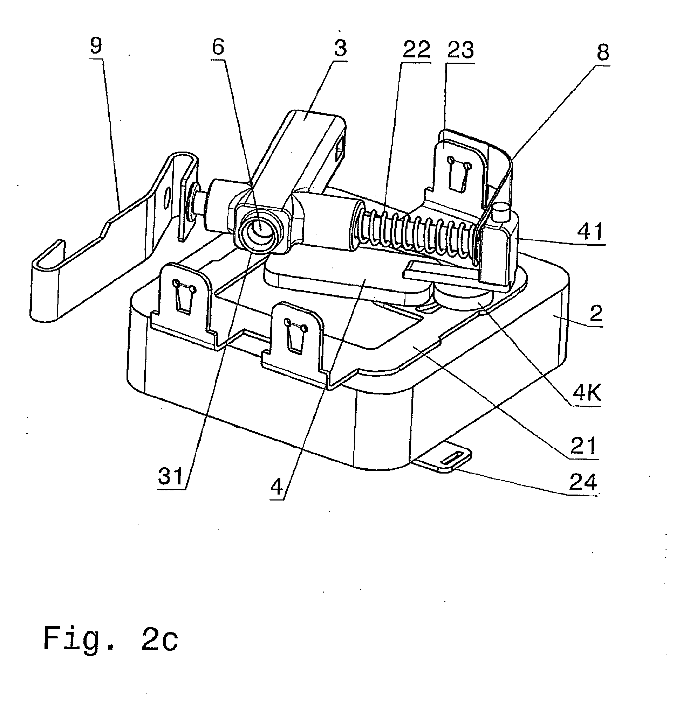

Die Fig. 2b und 2c zeigen die Ausführung der erfindungsgemäßen Schalteinrichtung innerhalb eines Formkörpers 3.

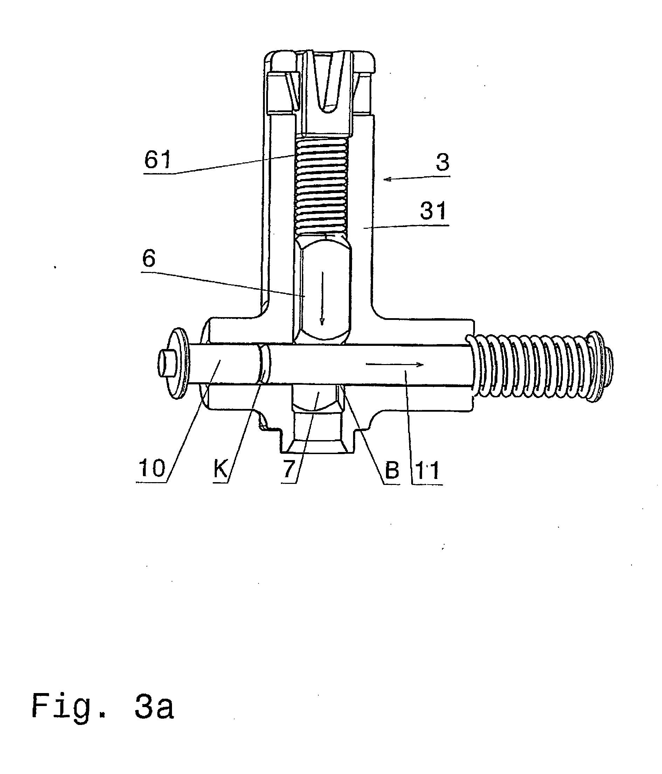

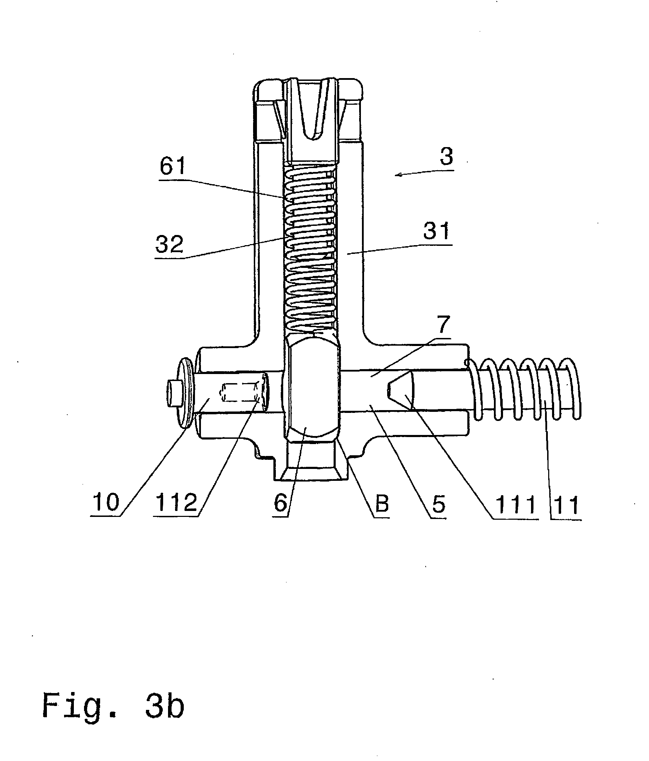

Die Schalteinrichtung umfasst Kontaktstücke 10 und 11 (siehe Fig. 3a und 3b), wobei im gezeigten Beispiel das Kontaktstück 11 unter Vorspannung einer Feder 22 beweglich im Formkörper 3 gelagert ist.

In Schließposition der Schalteinrichtung wird das bewegliche Kontaktstück 11 an das feste Kontaktstück 10 angepresst und vom Entriegelungsschieber 4 und einem dort vorhandenen nasenartigen Abschnitt 41 gehalten.

Der Schließzustand der Schalteinrichtung ist also durch das Mittel 4 gesichert und durch das thermische Auslösemittel 4K zur Öffnung der Schalteinrichtung freigebbar.

Der geöffnete Zustand der Schalteinrichtung ist mit der Fig. 2c illustriert. Hier ist auch die Bewegung des Trennelements 6 (siehe Fig. 3a und 3b) erkennbar, dessen Lageveränderung im öffnungsseitigen Abschnitt 31 des Formkörpers 3 deutlich wird.

Das Trennelement 6 dringt also in den sich ergebenden Abstandsraum (siehe Fig. 3a) der Kontaktstücke 10 und 11 ein, wobei das Trennelement 6 unter Vorspannung einer weiteren Feder 61 steht, um im Öffnungsfall schnell und gerichtet in den Abstandsraum einzudringen.

Der Formkörper 3 weist einen Ansatz 31 auf, welcher in einem Winkel orientiert ist, der von der Bewegungsrichtung des beweglichen Kontaktstücks 11 abweicht.

Der Ansatz 31 umfasst einen Hohlraum 32 zur Aufnahme des Trennelements 6.

Die zueinander weisenden Flächen der Kontaktstücke 10 und 11 können eine Konuskontur 111 mit zugehöriger konischer Ausnehmung 112 im Gegenkontaktstück aufweisen. Hierdurch wird die Stromübergangsfläche vergrößert und der Übergangswiderstand zwischen den Kontaktstücken 10 und 11 reduziert.

Das flexible elektrische Verbindungsmittel 8 ist einerseits mit dem beweglichen Kontaktstück 11 in Verbindung stehend und führt andererseits zum Teil 21, insbesondere einem dort angeformten Anschlussschenkel 23. Der weitere elektrische Anschluss 24 des Varistors 2 führt zum Steckanschluss gemäß Fig. 1b, rechts.

Der Abstandsraum bei geöffneten Kontaktstücken 10 und 11 wird mit einem Lichtbogenlöschraum 7, der im Ergebnis der Bewegung des Trennelements 6 letztendlich quasi gasdicht ist, verschlossen.

Die Schalteinrichtung ist mit der Verbindung 8 mit dem spannungsbegrenzenden Bauteil, d.h. dem Varistor 2 und einem Anschlussformteil 9 elektrisch kontaktiert, wobei das Anschlussformteil 9 Bestandteil des Steckkontakts gemäß Fig. 1b, links ist.

Die Innenkontur 5 innerhalb des Formstücks 3 entspricht der Außenkontur des beweglichen Kontaktstücks 11 unter Beachtung der notwendigen Toleranzen zur gewünschten freien Beweglichkeit des diesbezüglichen Kontaktstücks.

Das überspannungsbegrenzende Bauteil 2, ausgebildet bevorzugt als Varistor, ist gemäß den zeichnerischen Darstellungen über ein thermisches Auslösemittel 4K thermisch an das Entriegelungs- und Auslösesystem gekoppelt. Dabei steht das thermische Auslöseelement 4K unter keinem Stromdurchfluss.

Die Ausgestaltung des thermischen Auslöseelements kann damit völlig frei zur Optimierung des Ansprechverhaltens und damit zum Erreichen einer guten Auslösecharakteristik gewählt werden, und zwar über eine entsprechende Positionierung auf dem Varistor 2 und/oder einer Dimensionierung und Auswahl des Materials für das thermische Auslöseelement hinsichtlich Wärmekapazität und Wärmeleitfähigkeit. Das thermische Auslöseelement 4K kann als separates Teil gefertigt werden, welches mit einem Lot oder einem wärmeempfindlichen Kleber am Varistor fest befestigt wird. Andererseits aber kann das thermische Auslösemittel auch selbst aus einem Material bestehen, das sich bei Wärmeeinwirkung nachgiebig verformt.

In den überwiegenden Fällen wird eine sehr schnelle und thermisch empfindliche Auslösecharakteristik gewünscht. Dies kann dadurch realisiert werden, dass das thermische Auslösemittel direkt mit dem überspannungsbegrenzenden Bauteil optimal wärmeleitend verbunden wird oder aus einem thermisch isolierenden Umhüllungsmaterial gefertigt ist, um Wärmeverluste zu vermeiden. Wärmeleitfähige Verbindungen zu quasi parasitären Wärmesenken werden vermieden.

Da bei der erfindungsgemäßen Lösung der Überwachungskreis Ü sich nicht im Stoßstrompfad S befindet, ist die Auslegung der thermischen Überwachungseinrichtung ausschließlich und unter dem Blickwinkel des Ausfallverhaltens des spannungsbegrenzenden Bauelements dimensionierbar.

Beim Überschreiten einer eingestellten kritischen Temperatur wird die thermische Kopplung mit dem überspannungsbegrenzenden Element aufgehoben. Das thermische Auslösemittel wird mit Blick auf die Federkraft und den Entriegelungsschieber 4 weg bewegt, so dass die Schalteinrichtung freigegeben ist.

Durch die realisierte Trennung von Überwachungspfad Ü und Betriebs- und Stoßstromkreis S können die möglichen Überlastungsfehlerfälle des eingesetzten Überspannungsableiters frühzeitig erfasst und ein Abschalten vorgenommen werden, bevor eine Zerstörung, insbesondere ein Durchlegieren des oder der Überspannungsableiter erfolgt und ein netzbedingter Kurzschlussstrom auftritt.

Aufgrund des durch die Konstruktion der Schalteinrichtung mit Formkörper erhaltenen Eigenlöschvermögens kann auch ein höherer Überlast- bzw. Fehlerstrom sicher abgeschaltet werden.

Dieses gesteigerte Eigenlöschvermögen wird durch verschiedene, bereits oben geschilderte konstruktive Elemente erreicht.

Im geschlossenen Betriebszustand gemäß Fig. 3a wird der Strom über die Kontaktstücke 10 und 11 geführt, wobei die entsprechende Kontaktstelle K unter Federvorspannung steht.

Mit Freigabe der Schalteinrichtung bewegen sich die Kontaktstücke auseinander. Mit Erreichen der Position B fährt das bereits erwähnte Trennelement 6 in die Lichtbogenkammer 7 ein. Durch den damit verbundenen Kühlungseffekt steigt die Lichtbogenfeldstärke stark an.

Durch die Wahl des Werkstoffs des Trennelements 6 und des Werkstoffs des die Lichtbogenkammer bildenden Formkörpers 3 aus löschgasabgebenden Isolierstoffen wird das Schaltvermögen weiter gesteigert. Hierdurch wird erreicht, dass die Lichtbogenspannung so stark ansteigt, dass ein Löschen eines erheblichen Fehler- oder Kurzschlussstroms möglich wird, und zwar auch bei Gleichstromanwendungen.

Die Kapselung der Lichtbogenkammer 7 bewirkt unter Lichtbogeneinfluss ein Ansteigen des Innendrucks, was sich weiterhin positiv auf das Schaltvermögen auswirkt.

Die erreichte hohe Kontakttrenngeschwindigkeit der Gesamtanordnung sowie der große Kontaktabstand (siehe Fig. 3b) verbessern weiterhin die Schalteigenschaften.

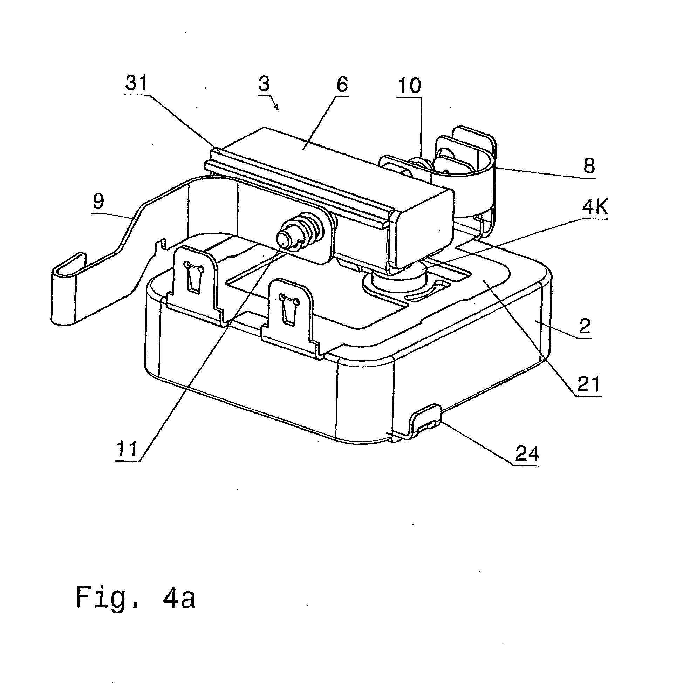

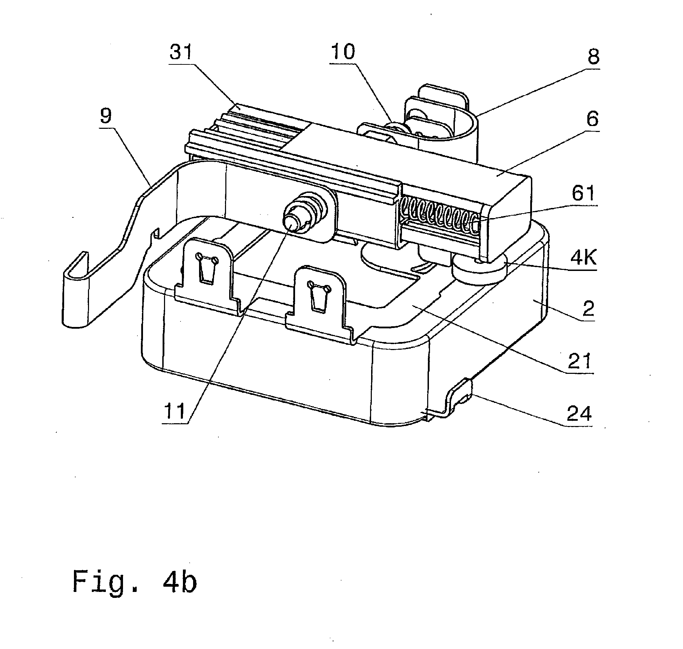

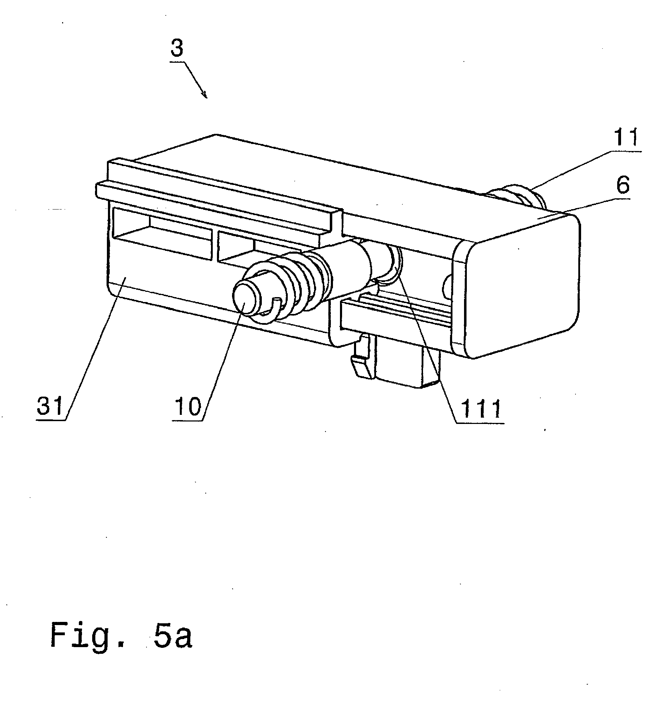

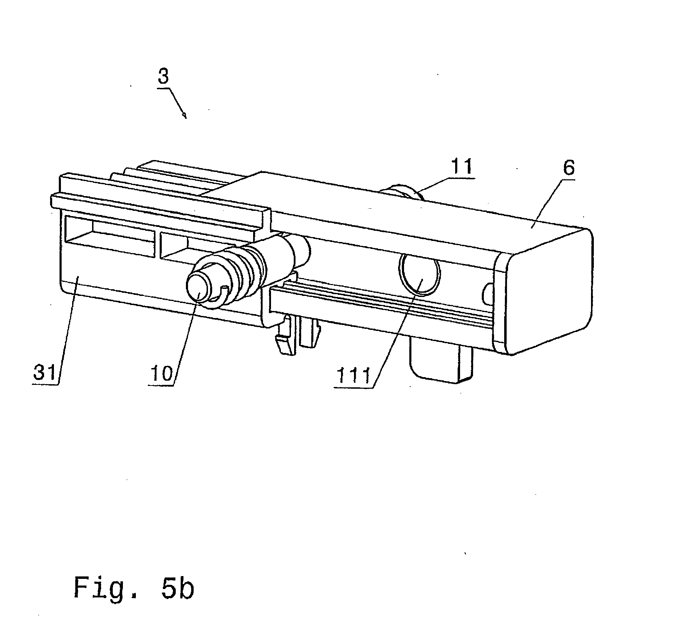

Die Ausführungsformen gemäß den Fig. 4a, 4b und Fig. 5a und 5b gehen von einer Lösung aus, die wiederum auf einen Entriegelungsschieber zurückgreift.

Auch bei dieser Ausführungsform ist die Schalteinrichtung innerhalb eines Formkörpers 3 befindlich. Gemäß Fig. 4a befindet sich das Trennelement 6 noch in einer durch das Mittel 4K gesicherten Position. Der geöffnete Zustand der Schalteinrichtung mit den Kontaktteilen oder Kontaktstücken 10 und 11 ist in der Fig. 4b illustriert.

Aus der Zusammenschau der Fig. 5a und 5b ist zu erkennen, wie das Trennelement 6 nach freigegebenem thermischen Auslösemittel 4K zwischen die Kontaktstücke 10 und 11 eindringt, und zwar unter Unterstützung der Bewegung des Trennelements 6 mit Hilfe der vorgespannten Feder 61 (siehe Fig. 4b).

Es ist aus der Darstellung gemäß den Fig. 5a und 5b auch ersichtlich, dass hier das Kontaktelement 111 in den Schieber bzw. das Trennelement 6 integriert wird. Dies führt zu folgenden Vorteilen. Zunächst wird die Lichtbogenbrenndauer zwischen den Kontakten 10 und 11 verkürzt, da kein offener Lichtbogen entsteht, bevor der Schieber in den Abstandsraum zwischen den Kontaktelementen 10 und 11 einfährt. Bei gleicher Baugröße im Vergleich zum voranstehend geschilderten Ausführungsbeispiel können konstruktiv längere Trennabstände realisiert werden, d.h. die Anordnung ist für höhere Spannungen einsetzbar. Letztendlich ist ein einfacher fertigungstechnischer Aufbau möglich, in dem das Kontaktelement 111 als Einlegeteil im Schieber positioniert werden kann. Es ist hier das stoffschlüssige Verbinden eines konischen Kontaktelements demnach nicht erforderlich.

## Patentansprüche

1. Überspannungsschutzeinrichtung, umfassend mindestens einen Überspannungsableiter (2) und eine, mit dem Überspannungsableiter (2) in Reihe geschaltete, thermisch auslösbare Schalteinrichtung (3), wobei vorgenannte Mittel eine Baueinheit bilden und das thermische Auslösemittel im Bereich der zu erwartenden Erwärmung des Überspannungsableiters (2) bei dessen Überlastung angeordnet ist,
**dadurch gekennzeichnet, dass**
das thermische Auslösemittel als nicht vom Betriebs- oder Stoßstrom durchflossenes Anschlagteil (4K) ausgebildet ist, welches thermisch und mechanisch mit dem Überspannungsableiter (2) gekoppelt ist und den Bewegungsweg eines Entriegelungsschiebers (4) blockiert, wobei bei thermischer Überlast eine Entriegelung der Schalteinrichtung (3) erfolgt, wobei diese ein erhöhtes Eigenlöschvermögen besitzt.

2. Überspannungsschutzeinrichtung nach Anspruch 1,
**dadurch gekennzeichnet, dass**
die Schalteinrichtung(3) zwei gegenüberliegende, ineinandergreifende Kontaktstücke (10; 11) aufweist, wobei mindestens eines der Kontaktstücke (11) beweglich ausgeführt ist und in Öffnungsrichtung der Schalteinrichtung (3) unter Federvorspannung steht, weiterhin der Schließzustand der Schalteinrichtung durch die Entriegelung (4) gesichert und durch das thermische Auslösemittel zur Öffnung der Schalteinrichtung freigebbar ist.

3. Überspannungsschutzeinrichtung nach Anspruch 2,
**dadurch gekennzeichnet, dass**
im Öffnungsfall der Schalteinrichtung in den sich ergebenden Abstandsraum der Kontaktstücke (10; 11) ein Trennelement (6) eindringt.

4. Überspannungsschutzeinrichtung nach Anspruch 3,
**dadurch gekennzeichnet, dass**
das Trennelement (6) unter Federvorspannung (61) steht, um im Öffnungsfall der Schalteinrichtung schnell und gerichtet in den Abstandsraum einzudringen.

5. Überspannungsschutzeinrichtung nach einem der Ansprüche 2 bis 4, **dadurch gekennzeichnet, dass**
mindestens Abschnitte der Kontaktstücke innerhalb eines eine Lichtbogenkammer bildenden Formkörpers (3) befindlich sind, wobei der Formkörper (3) einen Ansatz (31) aufweist, welcher in einem Winkel orientiert ist, welcher von der Bewegungsrichtung des beweglichen Kontaktstücks (11) abweicht.

6. Überspannungsschutzeinrichtung nach Anspruch 3 und 5,
**dadurch gekennzeichnet, dass**
der Ansatz (31) einen Hohlraum (32) zur Aufnahme des Trennelements (6) besitzt.

7. Überspannungsschutzeinrichtung nach einem der Ansprüche 2 bis 6, **dadurch gekennzeichnet, dass**
die zueinander weisenden Flächen der Kontaktstücke (10; 11) der Schalteinrichtung eine Kontur besitzen, um die Stromübergangsfläche zu vergrößern und den Übergangswiderstand zu verringern.

8. Überspannungsschutzeinrichtung nach Anspruch 7,
**dadurch gekennzeichnet, dass**
die Flächen als Konus und Gegenkonus (111) ausgebildet sind.

9. Überspannungsschutzeinrichtung nach einem der Ansprüche 1 bis 8, **dadurch gekennzeichnet, dass**
der Entriegelungsschieber einerseits am Anschlagteil (4K) anliegt und andererseits die Schalteinrichtung fixiert.

10. Überspannungsschutzeinrichtung nach Anspruch 2 und 9,
**dadurch gekennzeichnet, dass**
der Entriegelungsschieber einen nasenartigen Abschnitt besitzt, welcher das federvorgespannte Kontaktstück der Schalteinrichtung sichert.

11. Überspannungsschutzeinrichtung nach Anspruch 10,
**dadurch gekennzeichnet, dass**
im Bereich des federvorgespannten Kontaktstücks (11), welches vom nasenartigen Abschnitt des Entriegelungsschiebers gesichert wird, ein flexibles elektrisches Verbindungsmittel (8) befestigt ist.

12. Überspannungsschutzeinrichtung nach einem der Ansprüche 3 bis 6,
**dadurch gekennzeichnet, dass**
der Formkörper (3) und/oder das Trennelement (6) aus einem löschgasabgebenden Material bestehen.

13. Überspannungsschutzeinrichtung nach Anspruch 5 und 6,
**dadurch gekennzeichnet, dass**
der Formkörper (3), der Hohlraum (32) und das Trennelement (6) so ausgebildet sind, dass bei geöffneter Schalteinrichtung und in den Abstandsraum eingedrungenes Trennelement (6) eine gasdichte Abschottung realisiert ist.

14. Überspannungsschutzeinrichtung nach einem der Ansprüche 2 bis 13, **dadurch gekennzeichnet, dass**
die Bewegung des beweglichen Kontaktstücks (11) durch die Druckwirkung des sich ausbildenden Lichtbogens unterstützt wird.

## Claims

1. Overvoltage protection device comprising at least one surge arrester (2) and a thermally triggerable switching device (3) which is connected in series with the surge arrester (2), wherein the aforementioned components form a unit and the thermal triggering means is arranged in the area of the expected heating of the surge arrester (2) when same is overloaded,
**characterized in that**
the thermal triggering means is configured as a stop part (4K) not flown through by the operating current or surge current, which is thermally and mechanically coupled to the surge arrester (2) and blocks the path of motion of an unlocking slide (4), wherein the switching device (3) is unlocked in the event of a thermal overload, the switching device (3) having an increased self-quenching capacity.

2. Overvoltage protection device according to claim 1,
**characterized in that**
the switching device (3) includes two opposite engaging contact pieces (10; 11), wherein at least one of the contact pieces (11) is configured to be movable and is spring-preloaded in the opening direction of the switching device (3), further the closed condition of the switching device is secured by the unlocking mechanism (4) and can be released by the thermal triggering means to open the switching device (3).

3. Overvoltage protection device according to claim 2,
**characterized in that**
if the switching device is opened, a disconnecting member (6) penetrates into the resulting distance space of the contact pieces (10; 11).

4. Overvoltage protection device according to claim 3,
**characterized in that**
the disconnecting member (6) is subjected to a spring preload (61) so as to penetrate into the distance space fast and well-directed in the opening case of the switching device.

5. Overvoltage protection device according to one of claims 2 to 4,
**characterized in that**
at least portions of the contact pieces are located inside a molded body (3) defining an arc chamber, wherein the molded body (3) includes a shoulder (31) oriented at an angle that deviates from the direction of motion of the movable contact piece (11).

6. Overvoltage protection device according to claim 3 and 5,
**characterized in that**
the shoulder (31) is provided with a hollow space (32) to receive the disconnecting member (6).

7. Overvoltage protection device according to one of claims 2 to 6,
**characterized in that**
the surfaces of the contact pieces (10; 11) of the switching device facing towards each other have a contour so as to increase the current transition surface and reduce the transition resistance.

8. Overvoltage protection device according to claim 7,
**characterized in that**
the surfaces are formed as cone and counter-cone (111).

9. Overvoltage protection device according to one of claims 1 to 8,
**characterized in that**
the unlocking slide bears against the stop part (4K), on the one hand, and fixes the switching device, on the other hand.

10. Overvoltage protection device according to claim 2 and 9,
**characterized in that**
the unlocking slide includes a nose-type portion which secures the spring-preloaded contact piece of the switching device.

11. Overvoltage protection device according to claim 10,
**characterized in that**
in the region of the spring-preloaded contact piece (11), which is secured by the nose-type portion of the unlocking slide, a flexible electrical connecting means (8) is attached.

12. Overvoltage protection device according to one of claims 3 to 6,
**characterized in that**
the molded body (3) and/or the disconnecting member (6) are made of a material which emits a quenching gas.

13. Overvoltage protection device according to claim 5 and 6,
**characterized in that**
the molded body (3), the hollow space (32) and the disconnecting member (6) are configured to realize a gas-proof seclusion when the switching device is opened and the disconnecting member (6) has penetrated into the distance space.

14. Overvoltage protection device according to one of claims 2 to 13,
**characterized in that**
the movement of the movable contact piece (11) is supported by the pressure effect of the produced arc.

## Revendications

1. Dispositif de protection antisurtension, comprenant au moins un dérivateur de surtension (2) et un dispositif de commutation (3) branché en série avec le dérivateur de surtension (2) et déclenchable par voie thermique, dans lequel les moyens précités forment une unité structurelle et le moyen de déclenchement thermique est agencé dans la région du réchauffement attendu du dérivateur de surtension (2) lors de sa surcharge,
**caractérisé en ce que**
le moyen de déclenchement thermique est réalisé sous la forme d'une pièce de butée (4K) qui n'est pas traversée par le courant de service ou le courant de pointe, laquelle est couplée thermiquement et mécaniquement avec le dérivateur de surtension (2) et bloque le trajet de déplacement d'un tiroir de déverrouillage (4), et lors d'une surcharge thermique il se produit un déverrouillage du dispositif de commutation (3), et celui-ci possède une capacité d'extinction propre plus élevée.

2. Dispositif de protection antisurtension selon la revendication 1,
**caractérisé en ce que**
le dispositif de commutation (3) comprend deux pièces de contact opposées (10 ; 11) s'engageant l'une dans l'autre, et l'une au moins des pièces de contact (11) est réalisée mobile et se trouve sous la précontrainte d'un ressort en direction d'ouverture du dispositif de commutation (3), dans lequel en outre l'état de fermeture du dispositif de commutation est assuré par le déverrouillage (4) et est susceptible d'être libéré par le moyen de déclenchement thermique pour ouvrir le dispositif de commutation.

3. Dispositif de protection antisurtension selon la revendication 2,
**caractérisé en ce que**
dans le cas d'ouverture du dispositif de commutation, un élément de séparation (6) pénètre dans l'intervalle qui apparaît entre les pièces de contact (10 ; 11).

4. Dispositif de protection antisurtension selon la revendication 3,
**caractérisé en ce que**
l'élément de séparation (6) est sous la précontrainte d'un ressort (61) afin de pénétrer, dans le cas d'ouverture du dispositif de commutation, rapidement et de façon orientée dans l'intervalle.

5. Dispositif de protection antisurtension selon l'une des revendications 2 à 4,
**caractérisé en ce que**
au moins des tronçons des pièces de contact se trouvent à l'intérieur d'un corps conformé (3) formant une chambre à arc, et le corps conformé (3) comprend un talon (31) qui est orienté sous un angle qui diffère de la direction de déplacement de la pièce de contact mobile (11).

6. Dispositif de protection antisurtension selon la revendication 3 et 5,
**caractérisé en ce que**
le talon (31) possède une cavité (32) pour recevoir l'élément de séparation (6).

7. Dispositif de protection antisurtension selon l'une des revendications 2 à 6,
**caractérisé en ce que**
les surfaces tournées l'une vers l'autre des pièces de contact (10 ; 11) du dispositif de commutation possèdent un contour afin d'augmenter la surface de transition d'écoulement et de réduire la résistance à la transition.

8. Dispositif de protection antisurtension selon la revendication 7,
**caractérisé en ce que**
les surfaces sont réalisées sous forme de cône et de cône antagoniste (111).

9. Dispositif de protection antisurtension selon l'une des revendications 1 à 8,
**caractérisé en ce que**
le tiroir de déverrouillage est d'une part appliqué contre la pièce de butée (4K) et fixe d'autre part le dispositif de commutation.

10. Dispositif de protection antisurtension selon la revendication 2 et 9,
**caractérisé en ce que**
le tiroir de déverrouillage possède un tronçon en forme d'ergot, qui bloque la pièce de contact précontrainte par ressort du dispositif de commutation.

11. Dispositif de protection antisurtension selon la revendication 10,
**caractérisé en ce que**
un moyen de liaison électrique flexible (8) est fixé dans la région de la pièce de contact (11) précontrainte par ressort qui est bloquée par le tronçon en forme d'ergot du tiroir de déverrouillage.

12. Dispositif de protection antisurtension selon l'une des revendications 3 à 6,
**caractérisé en ce que**
le corps conformé (3) et/ou l'élément de séparation (6) sont en un matériau qui dégage un gaz d'extinction.

13. Dispositif de protection antisurtension selon la revendication 5 et 6,
**caractérisé en ce que**
le corps conformé (3), la cavité (32) et l'élément de séparation (6) sont réalisés de telle façon que lorsque le dispositif de commutation est ouvert et que l'élément de séparation (6) a pénétré dans l'intervalle, cela réalise un écran étanche aux gaz.

14. Dispositif de protection antisurtension selon l'une des revendications 2 à 13,
**caractérisé en ce que**
le mouvement de la pièce de contact mobile (11) est assisté par l'effet de compression de l'arc lumineux qui se forme.
